# EUROPÄISCHE PATENTSCHRIFT

(11) **EP 1 584 520 B1**
(45) Veröffentlichungstag und Bekanntmachung des Hinweises auf die Patenterteilung: **29.04.2009**
(21) Anmeldenummer: 05005335.4
(22) Anmeldetag: 11.03.2005
(51) Int. Cl.: B60R 21/01

(54) **Verfahren zum Steuern von Insassenrückhaltemitteln und Steuereinheit für Insassenrückhaltemittel in einem Fahrzeug**
Control process of a passenger restraint and control unit for a passenger restraint in a vehicle
Procédé de commande d'un système de retenue pour un passager et unité de commande pour un système de retenue pour un passager dans un véhicule

(30) Priorität: 08.04.2004 DE 102004018076; 07.06.2004 DE 102004027693
(43) Veröffentlichungstag der Anmeldung: 12.10.2005
(73) Patentinhaber: Daimler AG, 70327 Stuttgart (DE)
(72) Erfinder: Dickmann, Jürgen, 89079 Ulm (DE); Appenrodt, Nils, 89081 Ulm (DE); Rajan, Prasanna c/o R. Rajan, Nanganallur Chennai 600061 (IN)

(56) Entgegenhaltungen:
- EP-A- 1 333 403
- DE-A1- 19 949 409
- US-A1- 2003 154 010
- US-A1- 2003 234 519

## Beschreibung

Die Erfindung betrifft ein Verfahren zum Steuern von Insassenrückhaltemitteln in einem Fahrzeug nach Anspruch 1, mit wenigstens einem optischen Sensor zum zyklischen Erfassen einer Fahrzeugumgebung, dessen Messdaten zu Segmenten zusammenfassbar und potentiellen Kollisionsobjekten zugeordnet sind, und bei dem Tracks für die Objekte ermittelt werden können, die zum Steuern eines Precrash-Verhaltens der Insassenrückhaltemittel heranziehbar sind. Die Erfindung betrifft auch eine Steuereinheit für Insassenrückhaltemittel in einem Fahrzeug nach Anspruch 11, mit einem Steuerprozessor für Insassenrückhaltemittel und wenigstens einem mit dem Steuerprozessor verbundenen Sensor zum Erfassen einer Fahrzeugumgebung.

Verfahren und Steuerungen dieser Art setzen eine Sensorik voraus, die eine schnelle und verlässliche Erfassung der Fahrzeugumgebung ermöglicht. Erst auf Basis entsprechender Messdaten kann ein effizienter Einsatz der Sicherheitssysteme im (Pre)Crashfall gewährleistet werden. Die erforderliche Sensorik stellt deshalb auch einen erheblichen Kostenfaktor dar.

Die amerikanische Patentschrift US 6,085,151 offenbart ein Radarsystem zur Kollisionsvermeidung und Steuerung von Sicherheitssystemen in Fahrzeugen. Zum Erfassen von potentiellen Kollisionsobjekten wird die Dopplerinformation der Radarsignale ausgewertet, die bei einem optischen System nicht zur Verfügung stehen würde. Insofern ist das beschriebene System nur für die Verwendung im Zusammenhang mit Radarsensoren geeignet.

Die deutsche Offenlegungsschrift DE 101 48 071 A1 zeigt ein Verfahren zum Erkennen und Verfolgen von Objekten mit einem Sensor, bei dem zum Klassifizieren von potentiellen Kollisionsobjekten mehrere Objektlassen vorgesehen sind. Dem Objekt kann in Abhängigkeit von der zugeordneten Klasse ein Modelltyp und ein Wert für den entsprechenden Modellparameter zugeordnet werden. Damit ist die Effizienz dieses Verfahren auf den Umfang vorgegebener Objektklassen beschränkt, welche die Wirklichkeit nicht immer korrekt wiedergeben müssen.

Ein weiteres Verfahren ist aus den DE 19 949 409 A gemäß der Oberbegriff des Anspruchs 1 bekannt.

Es ist Aufgabe der vorliegenden Erfindung, ein Verfahren der eingangs genannten Art bereitzustellen, das eine schnelle und verlässliche Erfassung und Verfolgung potentieller Kollisionsobjekte zulässt, einfach strukturiert und kostengünstig umzusetzen ist. Es ist auch Aufgabe der vorliegenden Erfindung, eine entsprechende Steuerung zur Verfügung zu stellen.

Diese Aufgabe wird verfahrensseitig dadurch gelöst, dass von dem Sensor durchgeführte Messungen nach einer Erfassungsweite der Fahrzeugumgebung vorgefiltert werden, die für das Bestimmen eines Precrash-Verhaltens relevant ist.

Aus den Rohmessungen des Sensors werden dabei Messungen ausgeschlossen, die für eine Precrash-Funktionalität unwichtig sind. Die Rohmessungen des optischen Sensors umfassen dabei eine Entfernung, eine Messstrahlnummer und eine Empfangssignalstärke. Durch die reduzierte Datenmenge wird deren Verarbeitung erheblich beschleunigt. Bei Messungen eines Sensors von z. B. Entfernungen von 120 m sind für die Precrash-Funktionalität nur Messungen von Bedeutung, die innerhalb eines Bereiches von 50 m liegen.

Ein wesentlicher Punkt der vorliegenden Erfindung besteht deshalb darin, dass der Algorithmus keinen spezifischen Sensor voraussetzt. Es sind damit auch einfache und kostengünstige Sensoren zum Erfassen der Fahrzeugumgebung einsetzbar, oder Sensoren, die für Komfortfunktionen bereits im Fahrzeug vorhanden sind. Die Signalverarbeitung letztgenannter Sensoren ist üblicherweise weniger zeitkritisch, damit zwar langsamer aber auch hochauflösender. Der Algorithmus kann dabei Signale jedes optischen Sensors verarbeiten, z. B. von einem typischen Sensor mit einer horizontalen Abdeckung von 30° und einer Zykluszeit von 30 ms. Die Nachteile der genannten Sensoren werden durch die erfindungsgemäß beschleunigte Verarbeitung der Messungen aufgefangen. Optische Scanner weisen dabei eine hohe Winkel- und Entfernungsauflösung auf, welche die Genauigkeit der Objektlokalisation verbessern.

Vorteilhafte Weiterbildungen des Verfahren sind in den Unteransprüchen 2 bis 10 angegeben.

Von Vorteil ist es, wenn die Tracks eine Annäherungsgeschwindigkeit zum Erkennen und Verfolgen statischer und dynamischer Objekte umfassen. Dadurch wird insbesondere die Verfolgung von sich bewegenden Objekten und die Abschätzung von deren Crashrelevanz möglich. Zum Unterscheiden beider Objekttypen wird eine Annäherungsgeschwindigkeit an das Fahrzeug und/oder eine geschätzte Größe des Objekts herangezogen. Anders als bei Radarsensoren fehlt bei optischen Sensoren dabei eine Doppler-Geschwindigkeitsinformation. Die Annäherungsgeschwindigkeit wird deshalb allein aus den Entfernungsmessungen geschätzt. Dazu ist es notwendig, dass die Objektlokalisation und das Segmentieren der Messdaten genau sind.

Ein weiterer Vorteil entsteht, wenn bei einer Erfassung der Fahrzeugumgebung das Segmentieren und Zuordnen der Messungen zu den Tracks von Objekten in einem Schritt kombiniert durchgeführt wird. Auch dadurch wird die Verarbeitung der Messungen beschleunigt. Jeder Track stellt dabei ein potentielles Kollisionsobjekt dar, wobei jedes tatsächliche Ziel durch wenigstens einen Track repräsentiert ist. Da die betrachteten Crash-Zeiten in der Regel im Bereich einiger Millisekunden liegen, zielt der Algorithmus darauf ab, die Gesamtverarbeitungszeit einerseits durch Verringern überflüssiger Verarbeitungsschritte durch das Ausschließen unerwünschter Messungen, und andererseits durch einfache Strukturierung der Zuordnungsoperationen der Messungen zu den Tracks zu minimieren. Der Geschwindigkeitsvorteil beim Segmentieren und Zuordnen ergibt sich vorliegend dadurch, dass eine Messwert-Suchoperation (Search) mit einer Track-Zuordnungsoperation (Associate) kombiniert für jede Messung eines Zyklus durchgeführt wird, wodurch keine nachfolgende Verarbeitungsschleife für die Zuordnung segmentierter Messdaten zu den Tracks erforderlich ist.

Ein weiterer Vorteil entsteht, wenn den Tracks ein Status zugeordnet werden kann, der deren weitere Verarbeitung bestimmt. Ein Status der Tracks kann typischerweise FREE, INI-TIAL, TENTATIVE, CONFIRMED, MISSED oder DEAD sein. Abhängig von dem jeweiligen Status der Tracks ist ihre Verarbeitung damit steuerbar. So werden unterschiedliche Kriterien (Annäherungsgeschwindigkeit, Euklidische Distanz, Messstrahlnummer usw) für jeden Status genutzt, um die Rohmessungen aufzuteilen, was die Erfassungssicherheit potentieller Kollisionsobjekte durch den Algorithmus erhöht.

Bevorzugt ist es, wenn der Track mit einem Status CONFIRMED zuerst verarbeitet wird. Dadurch lässt sich eine priorisierte Verarbeitung von Tracks vornehmen, die in besonderem Maß crashrelevant sind, wodurch wiederum ein der Situation angepasstes Precrash-Verhalten der Insassenrückhaltemittel beschleunigt ermittelbar ist. Die Reaktionszeit des Algorithmus wird damit beschleunigt.

Besonders bevorzugt ist es, wenn eine Statusänderung wohldefinierten Übertragungsregeln folgt. Dadurch wird ein fehlender oder falscher Alarm ausgeschlossen, der sich z. B. durch falsche Statusdeklaration ergeben könnte. Die Zuverlässigkeit des Verfahrens wird dadurch erhöht.

Von Vorteil ist es, wenn zum Bestimmen einer Größe der Objekte ein Netzbelegungsverfahren angewandt wird. Zum Abschätzen der Objektgröße kann die aktuelle Trackposition herangezogen werden, deren geometrischer Schwerpunkt aus den segmentierten Rohmessungen der Tracks ermittelt wird. Diese geometrische Position wird geglättet und die nächste Trackposition und Trackgeschwindigkeit unter Verwendung adaptiver Filterverfahren bestimmt.

Bevorzugt ist es dabei, wenn die geschätzte Größe der Objekte zyklisch genauer bestimmbar ist. Damit ist ein Überlappungsbereich des Objekts mit dem Fahrzeugsicher sicher erkennbar, der zum frühzeitigen Auslösen der Insassenrückhaltemittel führt.

Ein Vorteil entsteht, wenn zum Initiieren eines Tracks Prozessdaten eines ACC(Active Cruise Control)-Prozessors herangezogen werden. Da Precrash-Anwendungen Szenarien hoher Dynamik umfassen, werden den aktuellen Messungen höhere Priorität beigemessen als den vergangenen Messungen (Historie). Die Tracks werden so früh wie möglich, d. h. in sehr wenigen Messzyklen angekündigt und die aktuelle Statusabschätzung ist auf die unmittelbare Vergangenheit beschränkt. Dadurch unterscheiden sich Precrash- von Komfortanwendungen wie ACC, bei dem die Tracks relativ langsam deklariert werden und Schätzungen hinsichtlich eines weiten Bereichs vergangener Messungen hochgradig geglättet sind. Insbesondere für wenig reflektierende Ziele, die in dem Sichtfeld eines ACC-Sensors liegen, weist die ACC-Signalverarbeitung eine höhere Sensibilität durch z. B. Integration von drei Messzyklen auf. Von einem ACC-Prozessor verarbeitete und für das Precrash-Verhalten relevante Objektinformationen können die Leistungsfähigkeit des Precrash-Algorithmus weiter erhöhen. Dadurch liegt bereits in wenigen Erfassungszyklen des Sensors eine schnelle und zuverlässige Aussage über einen Track bzw ein potentielles Kollisionsobjekt vor, wodurch die Reaktionszeit des Algorithmus verkürzt wird.

Bevorzugt ist es dabei, wenn die Prozessdaten wenigstens eine Geschwindigkeit umfassen. Dadurch lässt sich die Annäherungsgeschwindigkeit eines Objekts an das Fahrzeug schneller ermitteln, die üblicherweise zuerst eine Entfernungsbestimmung und ihre zyklische Änderung erfordern würde. Dies ist insbesondere im Fall eines dynamischen Objekts von Bedeutung, das sich sehr schnell auf das Fahrzeug zubewegt. Gleichzeitig können die Prozessdaten auch eine geschätzte Objektposition und/oder auch eine Objektgröße umfassen, die zum Ermitteln eines auf die tatsächliche Situation abgestimmten Precrash-Verhaltens der Insassenrückhaltemittel heranziehbar sind.

Die Aufgabe wird vorrichtungsseitig dadurch gelöst, dass der oder die Sensoren wenigstens einen LIDAR(Light Detection and Ranging)-Sensor umfassen, und der Steuerprozessor aus Messungen des LIDAR-Sensors ein Precrash-Verhalten der Insassenrückhaltemittel bestimmt.

Ein wesentlicher Punkt der vorliegenden Erfindung besteht dabei darin, dass durch Nutzung des im Fahrzeug vorhandenen LIDAR-Sensors keine weiteren Kosten für einen spezifischen Precrash-Sensor entstehen. Der LIDAR-Sensor wird primär in Weitbereichsanwendungen wie ACC (Active Cruise Control) angewendet. Erfassungsweiten liegen bei 0,5 m - 180 m und horizontalen 40° Abdeckung bei mechanischer Ausrichtung. Das vorstehend beschriebene Verfahren ist dabei auf Grund seines Algorithmus besonders gut geeignet, Informationen des LIDAR-Sensors aufzunehmen und zeitgerecht zu verarbeiten, ohne zusätzliche Hardware hinsichtlich Größe und Komplexität zu erfordern.

Vorteilhafte Weiterbildungen der Steuereinheit sind in den Unteransprüchen 12 bis 14 angegeben.

Von Vorteil ist es, wenn ein Filter zum Ausschließen von Messungen vorgesehen ist, die für das Bestimmen eines Precrash-Verhaltens der Insassenrückhaltemittel nicht relevant sind. Dadurch wird der Umfang zu verarbeitender Messdaten auf wesentliche Daten eingeschränkt, wodurch deren beschleunigte Verarbeitung und eine verkürzte Reaktionszeit der Steuereinheit möglich ist.

Bevorzugt ist es, wenn der Steuerprozessor zum Abfragen und Verarbeiten von Prozessdaten eines ACC-Prozessors ausgebildet ist. Grundsätzlich ist der Steuerprozessor dabei ohne diese Kopplung funktionsfähig, jedoch wird die schnelle und zuverlässige Erfassung von potentiellen Kollisionsobjekten durch Verwerten bereits am ACC-Prozessor zugreifbarer Objektinformationen deutlich verbessert. Die Kommunikationsstrecke kann dabei einen softwareseitigen Zugriff auf den Hauptspeicher des ACC-Prozessors oder eine physische Datenübertragungsstrecke umfassen.

Besonders bevorzugt ist es, wenn der Steuerprozessor mit dem ACC-Prozessor integriert ausgeführt ist. Damit ließe sich ein multifunktionales LIDAR-System gestalten. Der Signalverarbeitungsansatz kann ausgeweitet werden und eine Basis für zukünftige Sicherheits- und Stop-and-Go-Funktionen bilden, welche die Ausgabe von Signalverarbeitungsaufgaben im Weit- und Nahbereich kombiniert.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispiels unter Bezugnahme auf die zugehörigen Zeichnungen näher erläutert. Gleiche oder gleichwirkende Teile sind mit gleichen Bezugsziffern versehen. Dabei zeigen:
Fig. 1 ein Fahrzeug, bei dem im optischen Erfassungsbereich eines Precrash-Sensors ein potentielles Kollisionsobjekt erscheint;
Fig. 2 eine schematische Darstellung der wesentlichen Verarbeitungsschritte des erfindungsgemäßen Verfahrens, und
Fig. 3 eine schematische Darstellung einer erfindungsgemäßen Steuereinheit in Verbindung mit einem LIDAR-Sensor und einem ACC-Prozessor.

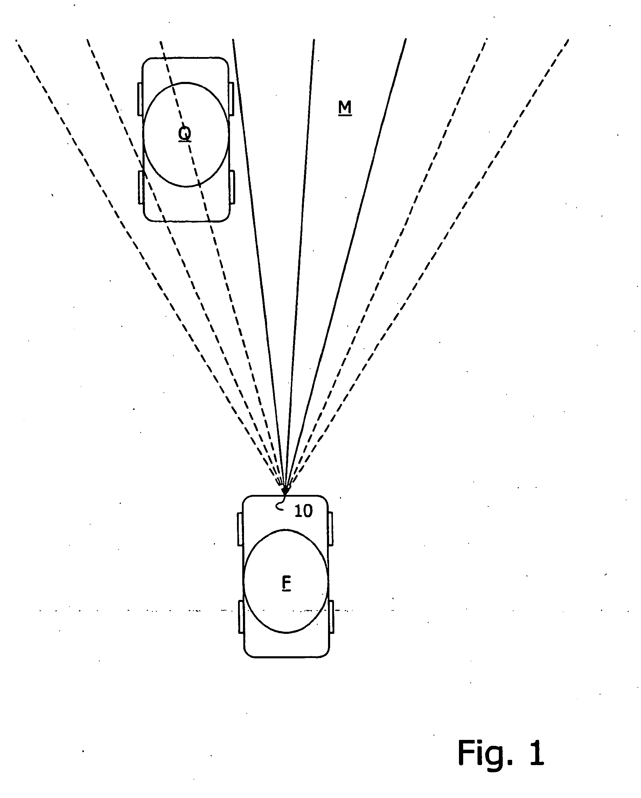

Fig. 1 zeigt ein Fahrzeug F, bei dem im optischen Erfassungsbereich eines Precrash-Sensors 10 ein potentielles Kollisionsobjekt O erscheint. Der Erfassungsbereich wird durch einzelne Messstrahlen M des Sensors 10 mit z. B. jeweils 15° Abdeckung gebildet, die in einem Zyklus fächerförmig in Fahrtrichtung ausgestrahlt werden.

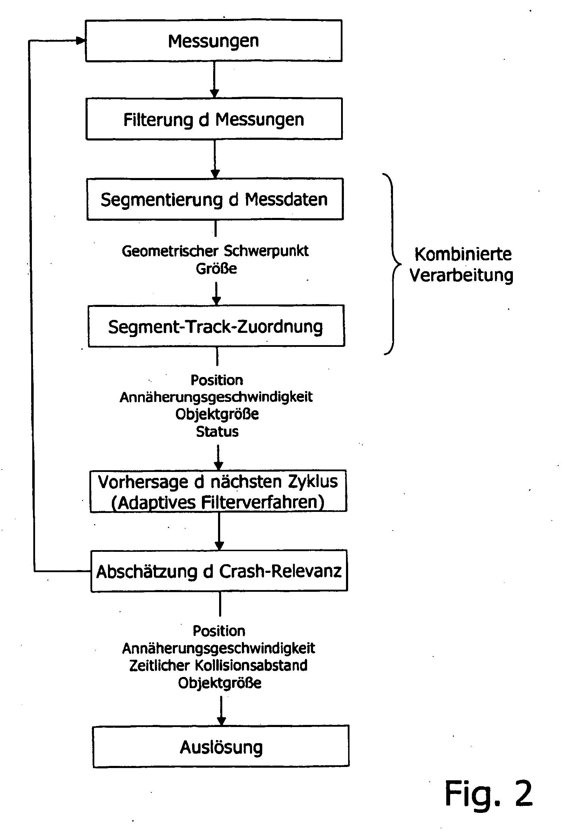

Fig. 2 zeigt eine schematische Darstellung der wesentlichen Verarbeitungsschritte des erfindungsgemäßen Verfahrens. Die Aufgabe des Signalverarbeitungsalgorithmus ist die schnelle und zuverlässige (Realtime)-Verarbeitung der Rohmessungen des Sensors 10, die Lokalisierung potentieller Kollisionsobjekte, die Schätzung ihrer Geschwindigkeitsvektoren hinsichtlich des Fahrzeugs und die Abschätzung der Crashrelevanz jedes Ziels.

Dazu werden die Messungen M des Sensors 10 zunächst durchgeführt und in einem nächsten Schritt gefiltert. Die Filterung umfasst dabei eine Vorfilterung der Messungen nach Reichweite, womit im vorliegenden Fall Erfassungsweiten über 50 m ausgeschlossen sein sollen. Der Algorithmus kann in diesem Schritt auf Grund der empfangenen Signalstärke und der Messstrahlnummer weiterhin Messungen ausschließen, die durch Nebelreflexionen hervorgerufen sind. Des weiteren können Messungen ausgefiltert werden, die auf temporäre Messausfälle zurückzuführen sind. Durch die Vorfilterung der Messungen wird der zu verarbeitende Datenumfang verkleinert und gleichzeitig auf das Wesentliche beschränkt. Damit steigt die Effizienz und Reaktionsgeschwindigkeit des Algorithmus.

Im nächsten Schritt werden die Messdaten segmentiert, d. h. z. B. nach geometrischem Schwerpunkt und Größe zusammengefasst und einzelnen Tracks zugeordnet (Next Neighbour Principle). Für Messungen, die nicht in das Gatter eines existierenden Tracks fallen, wird ein neuer Track initiiert. Eine Track-Datenstruktur besteht dabei aus einer Schätzung der Objektposition (x, y) in jedem Zyklus, einer Schätzung der Annäherungsgeschwindigkeit (Vx, Vy), einer Schätzung der Objektgröße und crashrelevanter Information. Die Segmentierung und Zuordnung der Messdaten wird in diesem Schritt kombiniert (Search, Associate) durchgeführt, so dass sich eine Beschleunigung der Verarbeitung ergibt.

Im nächsten Schritt wird aus den vorliegenden Trackdaten eine Vorhersage für den nächsten Erfassungszyklus abgeleitet, z. B. wo und mit welcher möglichen Überlappung das Objekt dann erscheinen wird. Dazu wird ein adaptives Filterverfahren angewendet.

Für die derart vorhergesagten Tracks wird in einem nächsten Schritt eine Abschätzung der Crashrelevanz vorgenommen, wobei z. B. nur Tracks mit Status CONFIRMED betrachtet werden. Dadurch reduziert sich die zu verarbeitende Datenmenge ein weiteres Mal, was die Verarbeitung beschleunigt und damit die Reaktionszeit des Algorithmus verkürzt. Wird eine Crashrelevanz eines oder mehrerer Objekte für den nächsten Erfassungszyklus festgestellt, kommt es zur Auslösung der entsprechenden Insassenrückhaltemittel, ansonsten kehrt der Algorithmus in den Schritt der Messungsaufnahme zurück.

Bei Auslösung werden Trackinformationen wie Position, Annäherungsgeschwindigkeit, zeitlicher Kollisionsabstand immer an die relevanten Sicherheitssysteme übergeben, bei Überlappung auch der Überlappungsbereich. Unter zugrundelegung dieser Angaben kann ein Precrash-Verhalten der Insassenrückhaltesysteme optimal gesteuert werden.

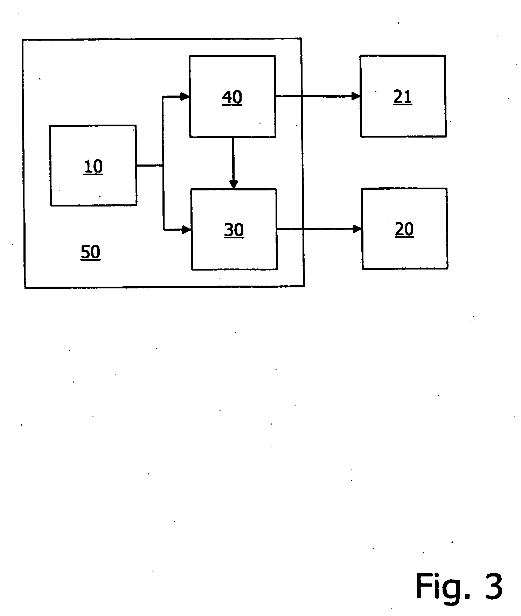

Fig. 3 zeigt eine schematische Darstellung einer erfindungsgemäßen Steuereinheit in Verbindung mit dem LIDAR-Sensor 10 und einem ACC-Prozessor 40. Ein Steuerprozessor 30 wird dabei von dem ACC-Prozessor mit precrash-relevanten Objektinformationen versorgt, verarbeitet aber auch als eigenständige Einheit Messungen des LIDAR-Sensors 10. Dadurch reduziert sich die Initialisierung der Tracks am Steuerprozessor 30, was eine schnellere Erfassungsgeschwindigkeit von potentiellen Kollisionsobjekten und damit eine kurze Reaktionszeit zum Ansteuern von Insassenrückhaltemitteln 20 bedeutet. Der ACC-Prozessor ist in seiner Steuerung des Fahrzeugs nicht beeinträchtigt. Die Komponenten 10, 30 und 40 können in einem gemeinsamen Gehäuse 50 untergebracht sein. Durch gemeinsame Nutzung des LIDAR-Sensors entsteht ein Kostenvorteil, der dadurch gesteigert werden könnte, wenn zudem beide Prozessoren 30, 40 integriert ausgeführt wären.

Das Verfahren und die Steuerung erlauben damit eine schnelle und zuverlässige Erfassung und Verfolgung potentieller Kollisionsobjekte mit kostengünstiger - weil hier zweifach genutzter - Sensorik.

### Bezugszeichenliste

- 10: LIDAR-Sensor
- 20: Insassenrückhaltemittel
- 21: Fahrzeugsteuerung
- 30: Steuerprozessor
- 40: ACC-Prozessor
- 50: Sensorgehäuse
- F: Fahrzeug
- M: Messung
- O: Potentielles Kollisionsobjekt

## Patentansprüche

1. Verfahren zum Steuern von Insassenrückhaltemitteln in einem Fahrzeug, mit wenigstens einem optischen Sensor (10) zum zyklischen Erfassen einer Fahrzeugumgebung, dessen Messdaten zu Segmenten zusammenfassbar und potentiellen Kollisionsobjekten (O) zugeordnet sind, und bei dem Tracks für die Objekte (O) ermittelt werden können, die zum Steuern eines Precrash-Verhaltens der Insassenrückhaltemittel (20) heranziehbar sind,
**dadurch gekennzeichnet,**
**dass** von dem Sensor (10) durchgeführten Messungen (M) nach einer Erfassungsweite der Fahrzeugumgebung vorgefiltert werden, die für das Bestimmen eines Precrash-Verhaltens relevant ist.

2. Verfahren nach Anspruch 1,
**dadurch gekennzeichnet,**
**dass** die Tracks eine Annäherungsgeschwindigkeit zum Erkennen und Verfolgen statischer und dynamischer Objekte (O) umfassen.

3. Verfahren nach Anspruch 1 oder 2,
**dadurch gekennzeichnet,**
**dass** bei einer Erfassung der Fahrzeugumgebung das Segmentieren und Zuordnen der Messungen (M) zu den Tracks von Objekten (O) in einem Schritt kombiniert durchgeführt wird.

4. Verfahren nach einem der vorstehenden Ansprüche,
**dadurch gekennzeichnet,**
**dass** den Tracks ein Status zugeordnet werden kann, der deren weitere Verarbeitung bestimmt.

5. Verfahren nach Anspruch 4,
**dadurch gekennzeichnet,**
**dass** der Track mit einem Status CONFIRMED zuerst verarbeitet wird.

6. Verfahren nach Anspruch 4 oder 5,
**dadurch gekennzeichnet,**
**dass** eine Statusänderung wohldefinierten Übertragungsregeln folgt.

7. Verfahren nach einem der vorstehenden Ansprüche,
**dadurch gekennzeichnet,**
**dass** zum Bestimmen einer Größe der Objekte (O) ein Netzbelegungsverfahren angewandt wird.

8. Verfahren nach Anspruch 7,
**dadurch gekennzeichnet,**
**dass** die geschätzte Größe der Objekte (O) zyklisch genauer bestimmbar ist.

9. Verfahren nach einem der vorstehenden Ansprüche,
**dadurch gekennzeichnet,**
**dass** zum Initiieren eines Tracks Prozessdaten eines ACC-Prozessors (40) herangezogen werden.

10. Verfahren nach Anspruch 9,
**dadurch gekennzeichnet,**
**dass** die Prozessdaten wenigstens eine Geschwindigkeit umfassen.

11. Steuereinheit für Insassenrückhaltemittel in einem Fahrzeug, insbesondere zur Durchführung des Verfahrens nach einem der vorstehenden Ansprüche, mit einem Steuerprozessor (30) für Insassenrückhaltemittel (20) und wenigstens einem mit dem Steuerprozessor (30) verbundenen Sensor (10) zum Erfassen einer Fahrzeugumgebung,
**dadurch gekennzeichnet,**
**dass** ein Filter vorgesehen ist, der von dem Sensor (10) durchgeführte Messungen (M) nach einer Erfassungsweite der Fahrzeugumgebung vorfiltert,
und **dass** der oder die Sensoren (10) wenigstens einen LIDAR-Sensor umfassen, und der Steuerprozessor (30) aus Messungen (M) des LIDAR-Sensors ein Precrash-Verhalten der Insassenrückhaltemittel (20) bestimmt.

12. Steuereinheit nach Anspruch 11,
**dadurch gekennzeichnet,**
**dass** ein Filter zum Ausschließen von Messungen (M) vorgesehen ist, die für das Bestimmen eines Precrash-Verhaltens der Insassenrückhaltemittel (20) nicht relevant sind.

13. Steuereinheit nach Anspruch 11 oder 12,
**dadurch gekennzeichnet,**
**dass** der Steuerprozessor (30) zum Abfragen und Verarbeiten von Prozessdaten eines ACC-Prozessors (40) ausgebildet ist.

14. Steuereinheit nach Anspruch 11 bis 13,
**dadurch gekennzeichnet,**
**dass** der Steuerprozessor (30) mit dem ACC-Prozessor (40) integriert ausgeführt ist.

## Claims

1. Method of controlling vehicle occupant restraint means in a vehicle, having at least an optical sensor (10) for cyclically sensing the surroundings of a vehicle, the measurement data of which sensor (10) can be compiled into segments and are assigned to potential collision objects (O), and in which tracks can be determined for the objects (O), which tracks can be used to control a precrash behaviour of the vehicle occupant restraint means (20), **characterized in that** measurements (M) which are carried out by the sensor (10) are prefiltered according to a range of sensing the surroundings of the vehicle which is relevant to the determination of a precrash behaviour.

2. Method according to Claim 1, **characterized in that** the tracks comprise an approach speed for detecting and following static and dynamic objects (O).

3. Method according to Claim 1 or 2, **characterized in that** when the surroundings of the vehicle are sensed, the segmentation and assignment of the measurements (M) to the tracks of objects (O) is carried out in combination in one step.

4. Method according to one of the preceding claims, **characterized in that** the tracks can be assigned a status which determines their further processing.

5. Method according to Claim 4, **characterized in that** the track with a CONFIRMED status is processed first.

6. Method according to Claim 4 or 5, **characterized in that** a change in status follows well-defined transmission of rules.

7. Method according to one of the preceding claims, **characterized in that** a network assignment method is applied for the determination of a size of the objects (O).

8. Method according to Claim 7, **characterized in that** the estimated size of the objects (O) can be determined cyclically in a relatively accurate fashion.

9. Method according to one of the preceding claims, **characterized in that** process data are used for initiating a track of an ACC processor (40).

10. Method according to Claim 9, **characterized in that** the process data comprise at least one velocity.

11. Control unit for vehicle occupant restraint means in a vehicle, in particular for carrying out the method according to one of the preceding claims, having a control processor (30) for vehicle occupant restraint means (20) and at least one sensor (10) which is connected to the control processor (30) and has the purpose of sensing the surroundings of a vehicle, **characterized in that** a filter is provided which prefilters measurements (M) carried out by the sensor (10) according to a range of sensing of the surroundings of the vehicle,
and **in that** the sensor or sensors (10) comprise/comprises at least one LIDAR sensor, and the control processor (30) determines a precrash behaviour of the vehicle occupant restraint means (20) from measurements (M) of the LIDAR sensor.

12. Control unit according to Claim 11, **characterized in that** a filter is provided for excluding measurements (M) which are not relevant to the determination of a precrash behaviour of the vehicle occupant restraint means (20).

13. Control unit according to Claim 11 or 12, **characterized in that** the control processor (30) is designed to interrogate and process data of an ACC processor (40).

14. Control unit according to Claims 11 to 13, **characterized in that** the control processor (30) is embodied integrated with the ACC processor (40).

## Revendications

1. Procédé pour commander des moyens de retenue des passagers dans un véhicule, comprenant au moins un capteur optique (10) destiné à la détection cyclique de l'environnement d'un véhicule dont les données mesurées peuvent être regroupées en segments et sont associées à des objets de collision (O) potentiels, et avec lequel peuvent être déterminés des itinéraires pour les objets (O), lesquels peuvent être utilisés pour commander un comportement avant collision du moyen de retenue des passagers (20), **caractérisé en ce que** les mesures (M) effectuées par le capteur (10) sont préfiltrées d'après une largeur de détection de l'environnement du véhicule qui est pertinente pour la détermination d'un comportement avant collision.

2. Procédé selon la revendication 1, **caractérisé en ce que** les itinéraires comprennent une vitesse de rapprochement pour la détection et le suivi des objets (0) statiques et dynamiques.

3. Procédé selon la revendication 1 ou 2, **caractérisé en ce que** lors de la détection de l'environnement du véhicule, la segmentation et l'affectation des mesures (M) aux itinéraires des objets (O) sont effectuées en une étape.

4. Procédé selon l'une des revendications précédentes, **caractérisé en ce qu'**un état qui détermine la suite du traitement peut être affecté aux itinéraires.

5. Procédé selon la revendication 4, **caractérisé en ce que** l'itinéraire dont l'état est CONFIRMÉ (CONFIRMED) est traité en premier.

6. Procédé selon la revendication 4 ou 5, **caractérisé en ce qu'**un changement d'état suit des règles de transmission parfaitement définies.

7. Procédé selon l'une des revendications précédentes, **caractérisé en ce qu'**un procédé d'occupation du réseau est utilisé pour déterminer une grandeur des objets (O).

8. Procédé selon la revendication 7, **caractérisé en ce que** la grandeur estimée des objets (O) peut être déterminée de manière cyclique avec plus de précision.

9. Procédé selon l'une des revendications précédentes, **caractérisé en ce que** les données de processus d'un processeur ACC (40) sont utilisées pour initier un itinéraire.

10. Procédé selon la revendication 9, **caractérisé en ce que** les données de processus comprennent au moins une vitesse.

11. Unité de commande pour des moyens de retenue des passagers dans un véhicule, notamment pour mettre en oeuvre le procédé selon l'une des revendications précédentes, comprenant un processeur de commande (30) des moyens de retenue des passagers (20) et au moins un capteur (10) relié au processeur de commande (30) pour détecter un environnement du véhicule, **caractérisée en ce qu'**il est prévu un filtre qui préfiltre les mesures (M) effectuées par le capteur (10) d'après une largeur de détection de l'environnement du véhicule et que le ou les capteurs (10) comprennent au moins un capteur LIDAR et le processeur de commande (30) détermine un comportement avant collision des moyens de retenue des passagers (20) à partir des mesures (M) du capteur LIDAR.

12. Unité de commande selon la revendication 11, **caractérisé en ce qu'**il est prévu un filtre pour exclure les mesures (M) qui ne sont pas pertinentes pour la détermination d'un comportement avant collision des moyens de retenue des passagers (20).

13. Unité de commande selon la revendication 11 ou 12, **caractérisé en ce que** le processeur de commande (30) est configuré pour interroger et traiter les données de processus d'un processeur ACC (40).

14. Unité de commande selon les revendications 11 à 13, **caractérisé en ce que** le processeur de commande (30) est réalisé intégré avec le processeur ACC (40).
